(19)

Europäisches
Patentamt
European
Patent Office
Office européen
des brevets

(11) **EP 2 038 206 B1**

(12) **EUROPEAN PATENT SPECIFICATION**

(45) Date of publication and mention
of the grant of the patent:
**18.04.2012 Bulletin 2012/16**

(21) Application number: **07720008.7**

(22) Date of filing: **21.06.2007**

(51) Int Cl.:
**B81C 1/00** *(2006.01)* **B81B 3/00** *(2006.01)*
**B82B 3/00** *(2006.01)*

(86) International application number:
**PCT/CA2007/001092**

(87) International publication number:
**WO 2007/147241 (27.12.2007 Gazette 2007/52)**

(54) **MEMS-BASED NANOPOSITIONERS AND NANOMANIPULATORS**

AUF MEMS BASIERENDE NANOPOSITIONIEREINRICHTUNGEN UND
NANOHANDHABUNGSVORRICHTUNGEN

NANO-POSITIONNEURS ET NANO-MANIPULATEURS À BASE MEMS

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **23.06.2006 CA 2551194**

(43) Date of publication of application:
**25.03.2009 Bulletin 2009/13**

(73) Proprietors:
• **Sun, Yu**
**Toronto, Ontario M5S 3G2 (CA)**
• **Liu, Xinyu**
**Toronto, Ontario M4Y 1R5 (CA)**

(72) Inventors:
• **Sun, Yu**
**Toronto, Ontario M5S 3G2 (CA)**
• **Liu, Xinyu**
**Toronto, Ontario M4Y 1R5 (CA)**

(74) Representative: **Forrester, Simon Joseph**
**Haseltine Lake LLP**
**Redcliff Quay**
**120 Redcliff Street**
**Bristol BS1 6HU (GB)**

(56) References cited:
**WO-A1-02/17470      WO-A1-03/107065
US-B1- 6 735 055    US-B2- 6 386 507
US-B2- 6 853 517**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Priority

## Field of the Invention

The present invention relates to nanotechnology and nanoscience and engineering.

## Background of the Invention

Microelectromechanical Systems ("MEMS") refers to technology on a very small scale, and converges at the nano-level into nanoelectromechanical systems ("NEMS") and nanotechnology, although NEMS can also refer to nano devices employing nano-scaled materials as active elements.

Recent advances in nanoscience and nanotechnology, including the manipulation and characterization of nano-materials (e.g., carbon nanotubes, silicon nanowires, and zinc oxide nanorods) and NEMS development, require manipulators with a nanometer positioning resolution, micrometer motion range, high repeatability, and large force output (i.e. payload driving capability). At present, the most common nanomanipulator used for precise positioning and manipulation inside SEM (scanning electron microscope) or TEM (transmission electron microscope) utilizes piezoelectric actuators.

Many other attempts have been made to construct devices using MEMS technologies. Electrostatic microactuators are most commonly used for nanopositioning. A comb drive microactuator with capacitive position sensor has been presented, which can provide a positioning resolution of 10 nm. (See P. Cheung and R. Horowitz, "Design, fabrication, position sensing, and control of an electrostatically-driven polysilicon microactuator," IEEE Trans. Magnetics, Vol. 32, pp. 122-128, 1996.) However, the application of this device is limited by its sub-micronewton force output. Resolution and positioning capability of the devices are sacrificed when driving a load.

Electrothermal microactuators were also employed in the development of nanopositioners. A dual-stage (coarse-motion stage and fine-motion stage) nanopositioner actuated by electrothermal actuators has been disclosed. (N.B. Hubbard, L.L. Howell, "Design and characterization of a dual-stage, thermally actuated nanopositioner," J. of Micromechanics and Microengineering, Vol. 15, No. 8, pp. 1482-1493, 2005.)

Further, a thermally actuated stage with a resolution of 30 nm for mechanical properties testing of nano-materials has been reported. (S.N. Lu, D.A. Dikin, S.L. Zhang, F.T. Fisher, J. Lee, and R.S. Ruoff, "Realization of nanoscale resolution with a micromachined thermally actuated testing stage," Review of Scientific Instruments, Vol. 5, No. 6, pp. 2154-2162, 2004.) Although electrothermal microactuation provides much larger output forces, hysteresis and thermal drift make the positioning accuracy relative low (tens to hundreds of nanometers) in open-loop operations. Furthermore, the difficulty of well controlled temperatures at the probe tip prevents its use in temperature sensitive applications.

United States Patent No. 6,874,668 teaches utilizing a nanomanipulation system to telescope a multiwalled nanotube. The patent provides no information on nanomanipulators themselves, although it provides a specific application where nanomanipulators are needed.

United States Patent No. 6,805,390 discloses the use of two carbon nanotubes and electrostatics to form a pair of nanotweezers for grasping nano-scaled objects. The nanotweezers will be mounted on a nanomanipulator for positioning/moving the nanotweezers, which is another specific application where nanomanipulators are needed.

United States Patent No. 5,903,085 relates to the use of piezoelectric actuators for nanopositioning. The positioning stage is not a micro device; rather, it is a macro system. Piezoelectric actuator-based systems typically provide a motion resolution of 1nm. However, inherent hysteresis and creep of piezoelectric actuators result in significant open-loop positioning errors, and therefore, demand sophisticated compensation control algorithms.

United States Patent No. 6,967,335 discloses a nanomanipulation system using piezoelectric actuators for use in SEM or TEM. Besides the high cost, the large sizes of commercially available piezoelectric nanomanipulators (5 cm to 20 cm) limit their use when applications have stringent space constraints. Although this system can be installed inside an SEM, it is too large to fit in the chamber of a TEM. It is a macro-scaled system having 5 nm motion resolution, which is different from our invention of MEMS-based nanomanipulators (millimeter by millimeter in size, sub-nanometer motion resolution).

In sum, known piezoelectric stages can achieve a positioning resolution of 1 nm. However, inherent hysteresis and creep of piezoelectric actuators result in significant open-loop positioning errors, and therefore, demand sophisticated compensation control algorithms. Besides the high cost, the large sizes of commercially available piezoelectric nanomanipulators (5 cm to 10 cm) limit their use when applications have stringent space constraints, particularly inside TEMs.

Although MEMS-based nanomanipulators have such advantages as low cost, small size, fast response, and flexibility for system integration, existing MEMS devices (e.g., electrostatic actuators and electrothermal actuators) are not capable of achieving both high positioning resolution and large force output.

What is needed are novel MEMS-based nanomanipulators with sub-nanometer resolution and millinewton force output, overcoming the aforementioned limitations of existing MEMS devices.

## Summary of the Invention

The invention is defined in the attached independent claim, to which reference should now be made. Further, optional features may be found in the sub-claims appended thereto.

In one aspect of the present invention, a MEMS-based nanomanipulator is provided which can achieve both sub-nanometer resolution and milliNewton force output.

In another aspect of the present invention, an integrated displacement sensor is provided to obtain position feedback that will enable precise closed-loop control during nanomanipulation and nanopositioning.

In an embodiment of the present invention, a nanomanipulator leverages the high repeatability and fast response of MEMS electrostatic microactuators while overcoming the limitation of low output forces. The device integrates a highly linear amplification mechanism, a lateral comb-drive microactuator, and a capacitive position sensor. The amplification mechanism is used to minify input displacements provided by the comb-drive microactuator for achieving a high positioning resolution at the output probe tip and to amplify output forces for manipulating nano-objects. The capacitive position sensor is placed at the input end as a position encoder to measure the input displacement. The strict linearity of the amplification mechanism guarantees that the position sensor can provide precise position feedback of the output probe tip, allowing for closed-loop controlled nanomanipulation.

## Brief Description of the Drawings

A detailed description of one or more embodiments is provided herein below by way of example only and with reference to the following drawings, in which:

Figure I illustrates a one degree-of-freedom nanomanipulator.

Figure 2 is a cross sectional view of the nanomanipulator according to figure 1 along axis A-A.

Figure 3 is a schematic diagram of the linear amplification mechanism with single axis flexure hinge pivots.

Figure 4 is a schematic diagram of the linear amplification mechanism with flexible beam pivots.

Figure 5 illustrates a two degree-of-freedom nanomanipulator built by orthogonally connecting two one degree-of-freedom nanomanipulators.

Figure 6 illustrates a nanomanipulator integrating a two-stage lever mechanism.

Figure 7 is a schematic diagram of the two-stage lever mechanism with single axis flexure hinge pivots.

Figure 8 is a schematic diagram of the two-stage lever mechanism with flexible beam pivots.

Figure 9 illustrates a nanomanipulator integrating a differential triplate capacitive position sensor.

In the drawings, one or more embodiments of the present invention are illustrated by way of example. It is to be expressly understood that the description and drawings are only for the purpose of illustration and as an aid to understanding, and are not intended as a definition of the limits of the present invention.

## Detailed Description of the Invention

The present invention provides a MEMS-based nanomanipulator which can achieve both sub-nanometer resolution and millimeter force output. An integrated displacement sensor is also provided to obtain position feedback that enables precise closed-loop control during nanomanipulation.

It should be expressly understood that the present invention functions either as a nanomanipulator or as a nanopositioner. As a nanomanipulator, besides the applications described herein, the device can be applied to precisely interacting with biological molecules, such as for biophysical property characterization or precisely picking and placing nano-sized objects, such as nanotubes/wires and nano particles. As a nanopositioner, the device can find a range of precision applications for in-plane positioning, for example, as an x-y precision positioner that can be mounted on the suspension head of a computer harddrive for data transfer. Currently, a meso-scaled piezoelectric positioner is used on the suspension head of a harddrive. The relatively long-term goal of the harddrive industry is to achieve a 0.01 nm positioning resolution. This ultra-high resolution is within the capability of the present invention that also offers the advantage of low cost, closed-loop operation, and high reproducibility across devices.

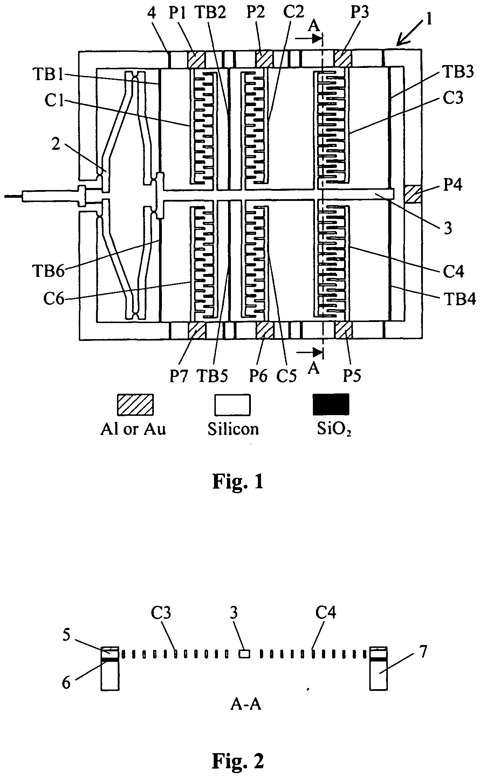

In an embodiment of the present invention, a nanomanipulator comprises three main parts, as illustrated in Figure I and Figure 2: (i) a linear amplification mechanism 2 that minifies or reduces input displacements and amplifies or increases input forces; (ii) lateral comb-drive microactuators C1, C2, C5, C6 that drive the amplification mechanism to generate forward and backward motion; and (iii) capacitive position sensors C3, C4 that measure the input displacement of the amplification mechanism. The capacitive position sensor can be connected with the input end through a shaft 3, for example.

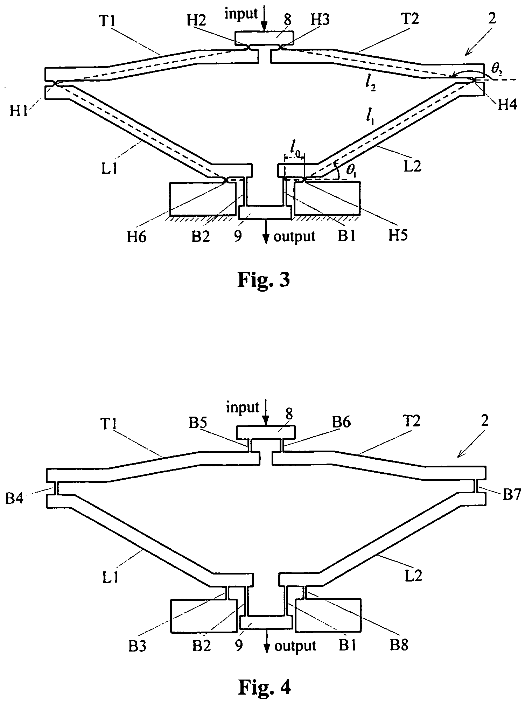

Comb-drive microactuators are commonly used components in MEMS research, and their design is well known. In the context of the present invention, the comb-drive microactuators have fast response, but low force output. The amplification mechanism 2 is employed in a minification mode to provide the microactuators C1, C2, C5, and C6 a low input stiffness to generate a large input displacement, which is minified to a nano-scaled displacement at the output end 9 (Figure 3). By changing the input stiffness of the amplification mechanism 2 and the stiffness of the tethering beams TB1, TB2, ..., TB6 at the input end, the resolution and motion range of the nanomanipulator can be adjusted.

The total electrostatic force $F_e$ generated by the comb-drive microactuators is

$$F_e = \frac{1}{2}\frac{N_a \varepsilon h_a}{g_a}V^2$$

where $\varepsilon$ is the permittivity of air, $V$ the actuation voltage, $h_a$ the finger thickness, $g_a$ the gap between adjacent actuation comb fingers, and $N_a$ is the number of actuation comb finger pairs. Therefore, the output displacement $y_{out}$ of the nanomanipulator is

$$y_{out} = \pm\frac{\alpha}{K_{sum}} = \pm\frac{1}{2}\frac{\alpha}{K_{sum}}\frac{N_a \varepsilon h_a}{g_a}V^2$$

where $\alpha$ is the minification ratio of the amplification mechanism, and $K_{sum}$ the input stiffness of the nanomanipulator.

To measure the input displacement and obtain the output displacement, the capacitance changes of the electrode pairs C4, C5 are measured. The capacitance change $\Delta C$ of the capacitive sensor is

$$\Delta C = \frac{N_s \varepsilon h_s}{g_s}y_{in}$$

where $N_s$ is the number of sensing comb finger pairs, $h_s$ the sensing finger thickness, $g_s$ the gap between adjacent sensing comb fingers, and $y_{in}$ the input displacement. The output displacement can also be accurately predicted via

$$y_{out} = \alpha y_{in} = \frac{\alpha g'}{N_s \varepsilon h'_f}\Delta C$$

The devices are preferably constructed by DRIE (deep reactive ion etching) on SOI (silicon on insulator) wafers that provide accurate control of device thickness and the convenience of mechanical connection and electrical insulation. (These microfabrication processes are known; see, e.g., Yu Sun, S.N. Fry, D.P. Potassek, D.J. Bell, and B.J. Nelson, "Characterizing fruit fly flight behavior using a microforce sensor with a new comb drive configuration," IEEE/ASME Journal of Microelectromechanical Systems, Vol. 14, No. 1, pp. 4-11, 2005). Electrical insulation between groups of actuation and sensing comb-drives is achieved by etching gaps 4 into device silicon layer 5 (Figure 2) and stopping at the buried silicon dioxide layer 6.

Figure 3 and Figure 4 show the structural detail of the linear amplification mechanism. The mechanism integrates two typical amplification mechanisms: toggle mechanism T1, T2 and lever mechanism L1, L2, which are connected in series by flexible pivots. The pivots can be either single-axis flexure hinges H1, H2, ..., H6 in figure 3, or flexible beams B3, B4, ..., B8 in Figure 4. The input displacement is minified by the toggle mechanism first, and then, the lever mechanism decreases the motion further. In order to eliminate lateral displacements at the output end caused by lever rotation, two pairs of toggle mechanisms T1, T2 and lever mechanisms L1, L2 are symmetrically configured. Flexible beams B1, B2 connect the two output ends of the lever mechanisms with the output platform 9. The minification ratio of the amplification mechanism is

$$\alpha = \frac{y_{out}}{y_{in}} = -\frac{l_0}{l_1(\cos\theta_1 - \sin\theta_1\cot\theta_2)}$$

where $l_0$ and $l_1$ are the lengths of lever short beam and long beam, $l_2$ the length of toggle beam, $\theta_1$ and $\theta_2$ the rotational angles of lever long beam and toggle beam. The input stiffness of the amplification mechanism is

$$K_{sum} = \frac{2\alpha}{l_0 l_1 \cos\theta_1}\left\{-\frac{l_1}{l_2}K_{hinge}\left[\cos(\theta_1+\theta_2)+\sin\theta_1\cos\theta_2\cot\theta_2\right]\right.$$

$$\left. -2K_{hinge} - \frac{Ewh^3}{12l}\right\} + \frac{4EW_1H_1^3}{L_1^3} + \frac{2EW_2H_2^3}{L_2^3}$$

where $K_{hinge}$ is the torsional stiffness of the single axis flexure hinge, $E$ the Young's modulus of silicon, $w$, $h$, and $l$ the width, height, and length of the flexible beams B1, B2; $W_1$, $H_1$, and $L_1$ the width, height, and length of the flexible beams TB2, TB3, TB4, and TB5; and $W_2$, $H_2$, and $L_2$ the width, height, and length of the flexible beams TB1, TB6.

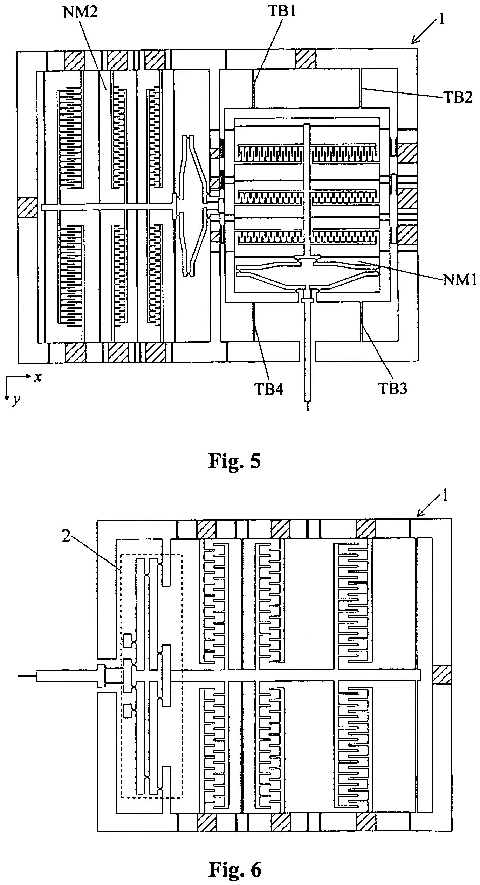

A two-degree-of-freedom nanomanipulator, for example, can be constructed by orthogonally connecting two one-degree-of-freedom nanomanipulators NM1, NM2, as shown in Figure 5. NM2, responsible for driving the probe tip along the x direction, is suspended by four tethering beams TB1, TB2, TB3, and TB4. NM2 drives NM1 to generate motion along the y direction.

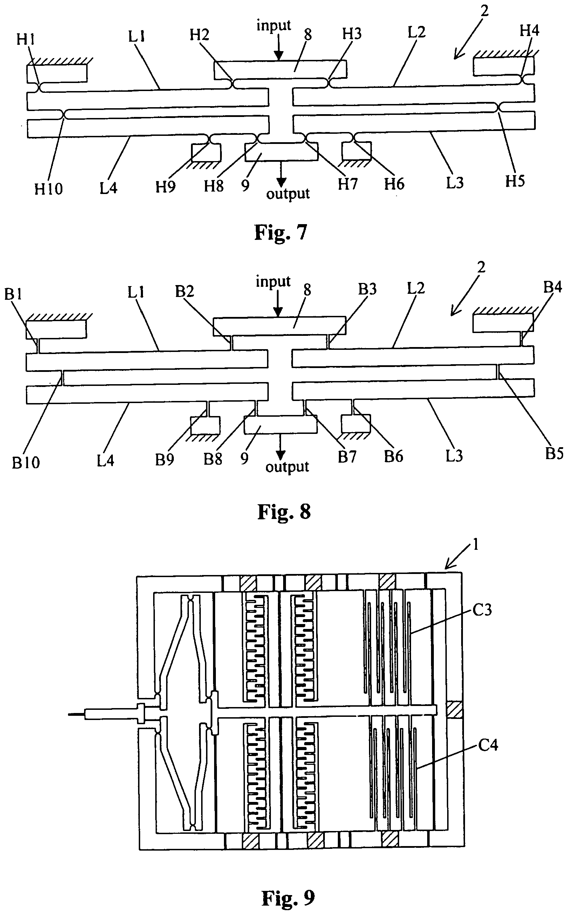

The nanomanipulator can also adopt other amplification mechanisms to implement the minification of input displacements and amplification of output force. Figure 6 illustrates a nanomanipulator integrating a two-stage lever mechanism 2, the configuration of which is shown in Figure 7 and Figure 8. Two lever mechanisms L1, L4, input end 8, and output end 9 are connected by flexible pivots, which can be either single axis flexure hinges H1, H2, H8, and H9 in Figure 7, or flexible beams B1, B2, B8, and B9 in Figure 8. The input displacement is minified twice by L1 and L4. A similar symmetric configuration eliminates the lateral displacement of the output end caused by lever rotation.

Position sensing can utilize either lateral comb drives or differential traverse comb drives to achieve linearity and a higher resolution than lateral comb drives. As shown in Figure 9, a differential tri-plate comb structure C3, C4, suitable for bulk micromachining, has a higher sensitivity than lateral comb position sensor (C3, C4 in Figure 1), and therefore, improves the motion resolution of the nanomanipulator further.

Although the use of lateral comb-drive microactuators was described in the example above, other embodiments of the present invention are possible. For example, although electrothermal microactuators have a generally poorer repeatability than comb-drive microactuators, with the integrated position sensors of the present invention it is possible to perform closed-loop positioning, which will compensate for the poorer repeatability of electrothermal microactuators. Consequently, due to the integrated position sensors permitting closed-loop positioning, electrothermal microactuators can be implemented instead of comb-drive electrostatic microactuators in an alternative embodiment of the present invention.

It should also be understood that a further design aspect of the present invention includes a coarse-fine actuation mechanism. Described above is a nanomanipulator/ nanopositioner that is capable of producing a total motion of a few micrometers. By integrating these devices with another electrostatic or electrothermal microactuator as an outer-loop for coarse positioning, the devices will have an operating range of tens of micrometers while still offering the same sub-nanometer motion resolution.

Further, extension of the present x-y in-plane nanopositioner to an x-y-z three-dimensional nanopositioning device (e.g., via microassembly), even broader applications are possible, such as for atomic force microscopy (AFM) scanning, optical coherence microscopy (OCM), and phase-shifting interferometry.

In sum, the MEMS nanomanipulators of present invention possess the following advantages: (i) sub-nanometer motion resolution; (ii) millinewton force output; (iii) permitting closed-loop controlled nanomanipulation; (iv) fast response; (v) low cost due to wafer-level microfabrication; and (vi) small size.

It will be appreciated by those skilled in the art that other variations of the one or more embodiments described herein are possible and may be practised without departing from the scope of the present invention.

## Claims

1. A nanomanipulator device (1) for manipulating or positioning objects, **characterised in that** the device comprises:

   (a) an amplification mechanism (2); and
   (b) a microactuator (C1, C2, C5, C6) connected with an input end (8) of the amplification mechanism (2);

   wherein the amplification mechanism (2) minifies input displacement and amplifies input force; and
   wherein the microactuator (C1, C2, C5, C6) drives the input end (8) forward and backward along an axis thereby causing an output end (9) to move forward and backward along the axis.

2. The device of claim 1, further **characterised in that** a capacitive position sensor (C3, C4) is connected with the input end (8).

3. The device of claim 2, further **characterised in that** the capacitive position sensor (C3, C4) measures forward and backward input displacements of the amplification mechanism (2) thereby predicting an output displacement of the amplification mechanism (2).

4. The device of claim 2, further **characterised in that** the capacitive position sensor (C3, C4) is a lateral comb-drive position sensor or a differential traverse comb- drive position sensor.

5. The device of claim 2, further **characterised in that** the microactuator (C1, C2, C5, C6) is a comb-drive electrostatic microactuator or an electrothermal microactuator.

6. The device of claim 1, further **characterised in that** the amplification mechanism (2) comprises symmetrically-configured toggle mechanisms (T1, T2) and lever mechanisms (L1, L2).

7. The device of claim 1, further **characterised in that** the amplification mechanism (2) comprises a pair of toggle mechanisms (T1, T2) and a pair of lever mechanisms (L1, L2), the toggle mechanisms (T1, T2) and the lever mechanisms (L1, L2) symmetrically configured.

8. The device of claim 7, further **characterised in that** the toggle mechanisms (T1, T2) and the lever mechanisms (L1, L2) are flexibly connected.

9. The device of claim 8, further **characterised in that** the toggle mechanisms (T1, T2) and the lever mechanisms (L1, L2,) are connected by single axis flexure hinges (H1-H4) or flexible beams (B1-B8).

10. The device of claim 6, further **characterised in that** the lever mechanisms (L1, L2) are connected to the output end by flexible beams.

11. The device of claim 1, **characterised by** a movement resolution of less than 1 nm.

12. The device of claim 1, **characterised in that** it is integrated with a second microactuator to define a coarse-fine actuation mechanism, the second microactuator acting as an outer loop for coarse positioning.

13. A tandem nanomanipulator device for manipulating or positioning objections, the tandem nanomanipulator device comprising first and second nanomanipulator devices (NM1, NM2) each in accordance with claim 1, wherein the first nanomanipulator device (NM1) and the second nanomanipulator device (NM2) are arranged in substantially orthogonal positions.

**14.** The tandem device of claim 13, further **characterised in that** it is operable to produce in-plane motion along two directions (x, y).

**15.** The tandem device of claim 13, further **characterised in that** the first nanomanipulator (NM1) or the second nanomanipulator (NM2) is supported by tethering beams (TB1-TB4).

**Patentansprüche**

**1.** Nanomanipulatorvorrichtung (1) zum Manipulieren oder Positionieren von Objekten, **dadurch gekennzeichnet, dass** die Vorrichtung umfasst:

a) einen Verstärkungsmechanismus (2); und
b) ein Mikrostellglied (C1, C2, C5, C6), das mit einer Eingabeseite (8) des Verstärkungsmechanismus (2) verbunden ist, wobei:

der Verstärkungsmechanismus (2) eingegebene Verschiebungen verkleinert und eingegebene Kräfte verstärkt; und
das Mikrostellglied (C1, C2, C5, C6) die Eingabeseite (8) entlang einer Achse vor und zurück bewegt und dadurch bewirkt, dass sich eine Ausgabeseite (9) entlang der Achse vor und zurück bewegt.

**2.** Vorrichtung nach Anspruch 1, zudem **dadurch gekennzeichnet, dass** ein kapazitiver Positionssensor (C3, C4) mit der Eingabeseite (8) verbunden ist.

**3.** Vorrichtung nach Anspruch 2, ferner **dadurch gekennzeichnet, dass** der kapazitive Positionssensor (C3, C4) die eingegebenen Vorwärts- und Rückwärtsverschiebungen des Verstärkungsmechanismus (2) misst und dadurch eine ausgegebene Verschiebung des Verstärkungsmechanismus (2) vorhersagt.

**4.** Vorrichtung nach Anspruch 2, ferner **dadurch gekennzeichnet, dass** der kapazitive Positionssensor (C3, C4) ein lateraler Kammantriebs-Positionssensor oder ein differentieller Kammantriebs-Positionssensor ist.

**5.** Vorrichtung nach Anspruch 2, weiterhin **dadurch gekennzeichnet, dass** das Mikrostellglied (C1, C2, C5, C6) ein elektrostatisches Kammantriebs-Mikrostellglied oder ein elektrothermisches Mikrostellglied ist.

**6.** Vorrichtung nach Anspruch 1, auch **dadurch gekennzeichnet, dass** der Verstärkungsmechanismus (2) symmetrisch konfigurierte Kniehebelgetriebe (T1, T2) und Hebelmechanismen (L1, L2) umfasst.

**7.** Vorrichtung nach Anspruch 1, auch **dadurch gekennzeichnet, dass** der Verstärkungsmechanismus (2) ein Paar Kniehebelgetriebe (T1, T2) und ein Paar Hebelmechanismen (L1, L2) umfasst, wobei die Kniehebelgetriebe (T1, T2) und die Hebelmechanismen (L1, L2) symmetrisch konfiguriert sind.

**8.** Vorrichtung nach Anspruch 7, zudem **dadurch gekennzeichnet, dass** die Kniehebelgetriebe (T1, T2) und die Hebelmechanismen (L1, L2) flexibel verbunden sind.

**9.** Vorrichtung nach Anspruch 8, zudem **dadurch gekennzeichnet, dass** die Kniehebelgetriebe (T1, T2) und die Hebelmechanismen (L1, L2) durch einachsige Festkörpergelenke (H1 - H4) oder flexible Träger (B1 - B8) verbunden sind.

**10.** Vorrichtung nach Anspruch 6, zudem **dadurch gekennzeichnet, dass** die Hebelmechanismen (L1, L2) durch flexible Träger mit der Ausgabeseite verbunden sind.

**11.** Vorrichtung nach Anspruch 1, **gekennzeichnet durch** eine Bewegungsauflösung von weniger als 1 nm.

**12.** Vorrichtung nach Anspruch 1, **dadurch gekennzeichnet, dass** die Vorrichtung mit einem zweiten Mikrostellglied integriert ist, damit ein Grob-Fein-Stellmechanismus bestimmt wird, wobei das zweite Mikrostellglied als übergeordnete Schleife für die grobe Positionierung dient.

**13.** Tandem-Nanomanipulatorvorrichtung zum Manipulieren oder Positionieren von Objekten, wobei die Tandem-Nanomanipulatorvorrichtung eine erste und eine zweite Nanomanipulatorvorrichtung (NM1, NM2) jeweils nach Anspruch 1 umfasst, und die erste Nanomanipulatorvorrichtung (NM1) und die zweite Nanomanipulatorvorrichtung (NM2) in im Wesentlichen orthogonalen Positionen angeordnet sind.

**14.** Tandemvorrichtung nach Anspruch 13, zudem **dadurch gekennzeichnet, dass** sie so betreibbar ist, dass sie eine Bewegung in einer Ebene entlang von zwei Richtungen (x, y) bewirkt.

**15.** Tandemvorrichtung nach Anspruch 13, zudem **dadurch gekennzeichnet, dass** der erste Nanomanipulator (NM1) oder der zweite Nanomanipulator (NM2) von Halteträgern (TB1 - TB4) gehalten wird.

## Revendications

**1.** Dispositif nano-manipulateur (1) pour manipuler ou positionner des objets, **caractérisé en ce que** le dispositif comprend :

(a) un mécanisme d'amplification (2), et
(b) un micro-actionneur (C1, C2, C5, C6) connecté à une extrémité d'entrée (8) du mécanisme d'amplification (2),

où le mécanisme d'amplification (2) minimise le déplacement d'entrée et amplifie la force d'entrée, et
où le micro-actionneur (C1, C2, C5, C6) entraîne l'extrémité d'entrée (8) vers l'avant et vers l'arrière selon un axe provoquant ainsi le déplacement d'une extrémité de sortie (9) vers l'avant et vers l'arrière selon l'axe.

**2.** Dispositif selon la revendication 2, **caractérisé en ce qu'**en outre un détecteur de position capacitif (C3, C4) est connecté à l'extrémité d'entrée (8).

**3.** Dispositif selon la revendication 2, **caractérisé en outre en ce que** le détecteur de position capacitif (C3, C4) mesure les déplacements d'entrée vers l'avant et vers l'arrière du mécanisme d'amplification (2), prédisant ainsi un déplacement de sortie du mécanisme d'amplification (2).

**4.** Dispositif selon la revendication 2, **caractérisé en outre en ce que** le détecteur de position capacitif (C3, C4) est un détecteur de position à entraînement par peigne latéral ou un détecteur de position à entraînement par peigne transverse différentiel.

**5.** Dispositif selon la revendication 2, **caractérisé en outre en ce que** le micro-actionneur (C1, C2, C5, C6) est un micro-actionneur électrostatique à entraînement par peigne ou un micro-actionneur électrothermique.

**6.** Dispositif selon la revendication 1, **caractérisé en outre en ce que** le mécanisme d'amplification (2) comprend des mécanismes articulés configurés symétriquement (T1, T2) et des mécanismes de levier (L1, L2).

**7.** Dispositif selon la revendication 1, **caractérisé en outre en ce que** le mécanisme d'amplification (2) comprend une paire de mécanismes articulés (T1, T2) et une paire de mécanismes de levier (L1, L2), les mécanismes articulés (T1, T2) et les mécanismes de levier (L1, L2) étant configurés symétriquement.

**8.** Dispositif selon la revendication 7, **caractérisé en outre en ce que** les mécanismes articulés (T1, T2) et les mécanismes de levier (L1, L2) sont connectés de manière flexible.

**9.** Dispositif selon la revendication 8, **caractérisé en outre en ce que** les mécanismes articulés (T1, T2) et les mécanismes de levier (L1, L2) sont connectés par des charnières à flexion à axe unique (H1-H4) ou par des traverses flexibles (B1-B8).

**10.** Dispositif selon la revendication 6, **caractérisé en outre en ce que** les mécanismes de levier (L1, L2) sont connectés à l'extrémité de sortie par des traverses flexibles.

**11.** Dispositif selon la revendication 1, **caractérisé par** une résolution du mouvement inférieure à 1 nm.

**12.** Dispositif selon la revendication 1, **caractérisé en ce qu'**il est intégré à un deuxième micro-actionneur pour définir un mécanisme de commande grossier-fin, le deuxième micro-actionneur agissant comme une boucle externe pour le positionnement grossier.

13. Dispositif nano-manipulateur en tandem pour manipuler ou bien positionner des objets, le dispositif nano-manipulateur en tandem comprenant un premier et un deuxième dispositif nano-manipulateur (NM1, NM2) chacun selon la revendication 1, **caractérisé en ce que** le premier dispositif nano-manipulateur (NM1) et le deuxième dispositif nano-manipulateur (NM2) sont placés dans des positions essentiellement perpendiculaires.

14. Dispositif en tandem selon la revendication 13, **caractérisé en outre en ce qu'**il est utilisable pour produire un mouvement dans un plan selon deux directions (x, y).

15. Dispositif en tandem selon la revendication 13, **caractérisé en outre en ce que** le premier nano-manipulateur (NM1) ou le deuxième nano-manipulateur (NM2) est supporté par des traverses d'ancrage (TB1-TB4).

4 P1 TB2 P2 C2 P3 1

A

TB1

C1

2

TB6

C6

TB3

C3

P4

3

C4

TB4

P7 TB5 P6 C5 A P5

Al or Au    Silicon    SiO₂

**Fig. 1**

C3    3    C4

5

6

7

A-A

**Fig. 2**

10

**Fig. 3**

**Fig. 4**

Fig. 5

Fig. 6

**Fig. 7**

**Fig. 8**

**Fig. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6874668 B
- US 6805390 B
- US 5903085 A
- US 6967335 B

**Non-patent literature cited in the description**

- **P. CHEUNG ; R. HOROWITZ.** Design, fabrication, position sensing, and control of an electrostatically-driven polysilicon microactuator. *IEEE Trans. Magnetics,* 1996, vol. 32, 122-128
- **N.B. HUBBARD ; L.L. HOWELL.** Design and characterization of a dual-stage, thermally actuated nanopositioner. *J. of Micromechanics and Microengineering,* 2005, vol. 15 (8), 1482-1493
- **S.N. LU ; D.A. DIKIN ; S.L. ZHANG ; F.T. FISHER ; J. LEE ; R.S. RUOFF.** Realization of nanoscale resolution with a micromachined thermally actuated testing stage. *Review of Scientific Instruments,* 2004, vol. 5 (6), 2154-2162
- **YU SUN ; S.N. FRY ; D.P. POTASSEK ; D.J. BELL ; B.J. NELSON.** Characterizing fruit fly flight behavior using a microforce sensor with a new comb drive configuration. *IEEE/ASME Journal of Microelectromechanical Systems,* 2005, vol. 14 (1), 4-11